# EUROPEAN PATENT SPECIFICATION

(11) **EP 0 719 593 B1**
(45) Date of publication and mention of the grant of the patent: **31.05.2000**
(21) Application number: 95120549.1
(22) Date of filing: 27.12.1995
(51) Int. Cl.: B05D 5/08, C09D 127/18

(54) **Process for the application of antistick PTFE-based coating to pre-degreased shaped aluminium articles**
Verfahren zur Herstellung von antihaftigen Überzügen auf der Basis von PTFE auf entfetteten Aluminiumformkörpern
Procédé pour le dépôt d'un revêtement antiadhérent à base de PTFE sur un objet façonné en aluminium

(30) Priority: 30.12.1994 IT MI942682
(43) Date of publication of application: 03.07.1996
(73) Proprietor: Akzo Nobel Non Stick Coatings S.r.l., Fombio (Lodi) (IT)
(72) Inventor: Bignami, Claudio, I-20071 Casalpusterlengo (IT)
(74) Representative: Gervasi, Gemma, Dr.

(56) References cited:
- EP-A- 0 607 934
- US-A- 4 818 350
- US-A- 4 898 905

## Description

The present invention relates to a process for the application of antistick PTFE-based coatings to aluminium shaped articles such as pots, pans and relevant lids and all other utensils usually employed for food preparation and cooking (mixing spoons, spatulas, baking pans, oven racks, etc.).

According to said process, a primer layer is applied to pre-degreased shaped articles, which have not undergone chemical pickling or mechanical abrasion (sand-blasting or grinding) and exhibit an Ra surface roughness lower than 1.2 µ.

### Prior Art

The use of no-stick cookware has extraordinarily increased during the last thirty years. Consequently, studies have been and are still being conducted to develop antistick paint formulations and relevant methods of application to the pot and pan surface coming into contact with food.

With a view to overcoming the difficulties met with in making a PTFE-based water paint adhere to a metal support, a number of methods have been studied to treat surfaces prior to painting, in particular to endow surfaces with a sufficient roughness securing good paint anchorage to the metal support. Among said treatments, let us mention chemical pickling and the mechanical abrasion of the superficial layer by grinding and sand-blasting.

For example, a particularly effective way of pickling an aluminium surface for antistick paint application is disclosed in Italian Patent No. 1,226,347 by the Applicant.

A PTFE-free water paint containing a surfactant, finely divided silica particles, and a polyethersulphone (PES) or polyamidoimidic resin (PAI) for application to a degreased metal support and acting as a bridge with the subsequent PTFE-based paint layer is disclosed in US patents No. 5,049,437 and No. 5,079,073.

Furthermore, a sliding material containing PTFE, PAI, carbon black and silica is also disclosed in US-A-4,898,905.

The need for improved application methods based on simpler and low-cost techniques is acknowledged.

The advantage afforded by the possibility of excluding chemical pickling is a clearcut one in terms both of reduced metal surface pretreatment costs and of absence of liquid and gaseous pollutants resulting from pickling. Furthermore, productivity is enhanced thanks to the elimination of a chemical treatment that unavoidably takes a given time.

Paints for antistick coatings applicable to unpickled and merely degreased aluminium surfaces are also known. However, said paints - based on solvents - have the inconvenience of being highly noxious and a cause of pollution of workroom environments owing to the huge amounts of solvents unavoidably liberated during the application process.

### Technical Problem

The object of the present invention is of implementing a process for the application of an antistick coating to aluminium articles, such as pots, pans and other utensils usually employed for food cooking, whose metal surface pretreatment is limited to degreasing only, namely is exclusive of chemical pickling and/or mechanical abrasion (sand-blasting, grinding). The process concerns a spray type PTFE-based paint in a water dispersion, which, applied as primer, exhibits a tight adhesion to the metal support despite the low roughness of the support surface (Ra below 0.2 µ).

### Detailed Description of the Invention

As said above, the process of the present invention is characterized by the fact that the aluminium article to be antistick coated does not undergo pretreatments as it is simply degreased and the surface smoothness resulting from sheet aluminium shaping is maintained. Thus, the Ra surface roughness is lower than 1.2 µ.

Degreasing is carried out according to one of the known methods, i.e. in an alkaline or acid environment, or with solvents.

Tight coating adhesion to the metal support has required the development of an aqueous paint having a specific composition, suitable for being sprayed as primer.

The basic ingredients of the composition are as follows:
- polytetrafluoroethylene in the form of an aqueous dispersion at 55% to 60% by wt. of PTFE, in a quantity ranging from 26.5% to 30% by wt. of the total paint composition, corresponding to 15 to 18 parts by wt. of PTFE;
- polyamidoimide resin (PAI) in the form of a solution of 30% by wt. of PAI in N-methylpyrrolidone solvent, in a quantity corresponding to 3.9% to 4.4% by wt. of PAI in respect of the total paint composition.

This ingredient previously undergoes partial hydrolysis in the presence of amines;
- colloidal silica in an aqueous dispersion at 30% by wt. of solid, stabilized with sodium ion, in a quantity ranging from 18% to 20% by wt. of the total paint composition, corresponding to 5.4 to 6 parts by wt. of silica on dry basis;
- a carbon black of the Degussa Special Black 550® type, in a quantity equal to 1% to 2% by wt. in respect of the total paint composition.

A commercial PTFE suitable for this composition is Montefluos's, known under the trade name of ALGOFLON®.

A suitable PAI is Rhône Poulenc's, known under the trade name of Rhodeftal 200®.

A suitable colloidal silica is Azko's, known under the trade name of Nyacol®, in particular Nyacol 830 or Nyacol 1430, or Kempo's corresponding products known as Kemprosil.

A major role in favour of paint adhesion to the metal support and of chemical resistance (tested as resistance to blistering in boiling water) is played by the type of carbon black used in the formulation.

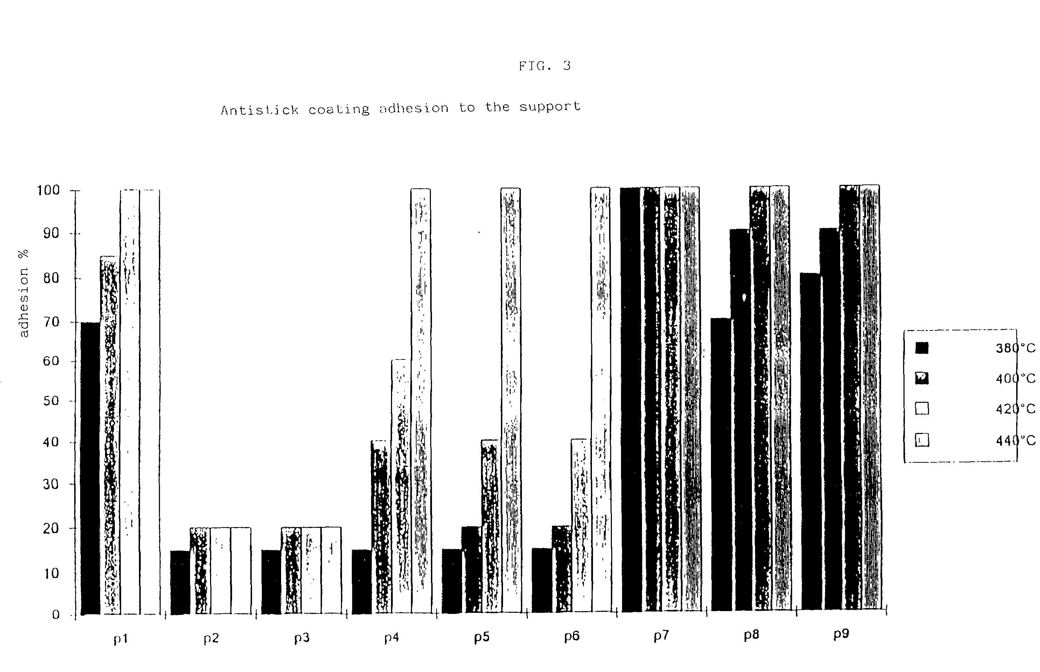

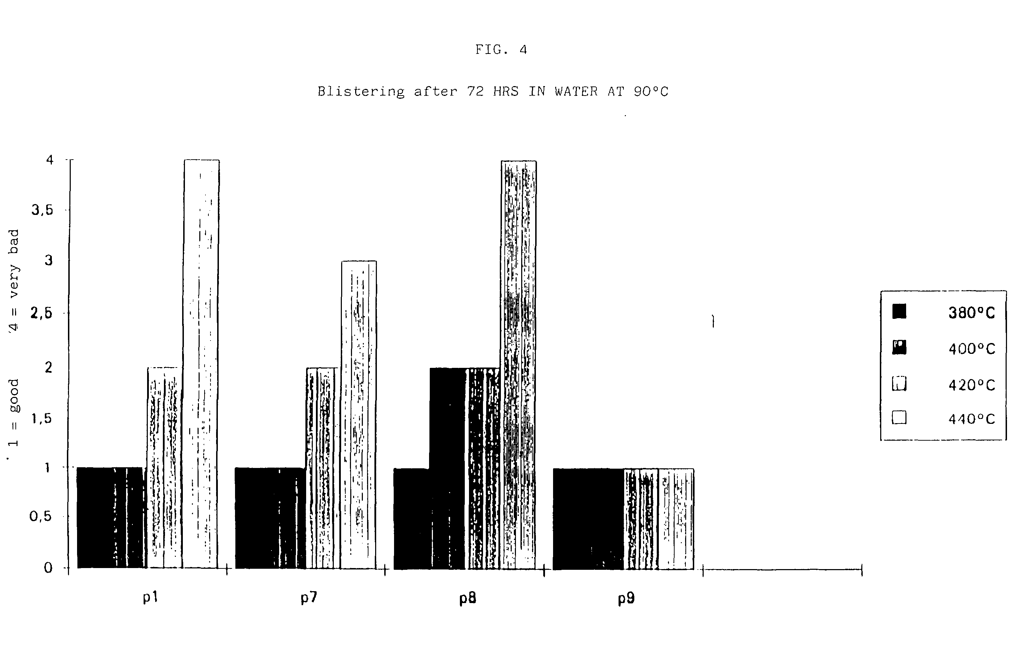

It has been found that some types of carbon black exert a favourable influence on the adhesion to the Al support (see Fig. 3). Anyhow, resistance to blistering is insufficient, in particular if the baking temperature ranges, as is normal, from 410°C to 430°C (see Fig. 4). It has been surprisingly found that, in addition to exhibiting a high adhesion to the support (see Fig. 3), the use of the abovesaid type of carbon black, marked P9 in the graphs, also shows an excellent resistance to blistering over a broad baking temperature range (380°C to 440°C) and, unexpectedly, even with as higher baking temperatures as to 440°C (see Fig. 4).

In the case of other types of carbon black as per Fig. 4, baking temperatures below the standard ones would be required to secure an acceptable resistance to blistering. On the other hand, too low baking temperatures have an adverse effect on coating adhesion to the support, as shown by Fig. 3.

Formulations containing the specific type of carbon black referred to above and applied to a merely degreased aluminium support with an Ra below 1.2 µ have demonstrated that adhesion and resistance to blistering are as good as when applied to aluminium supports pretreated for surface roughening (Ra>1.2 µ).

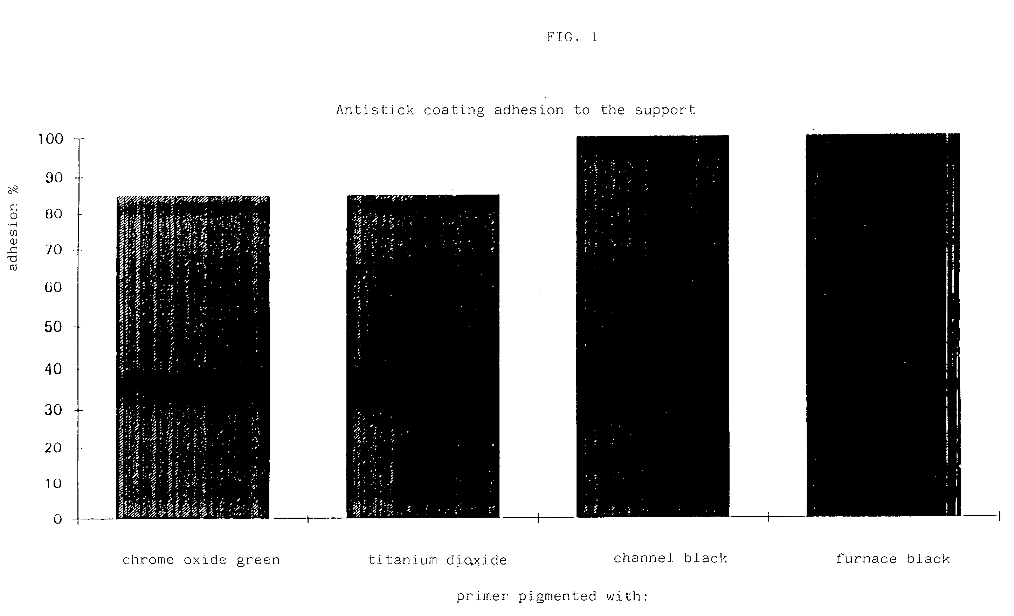

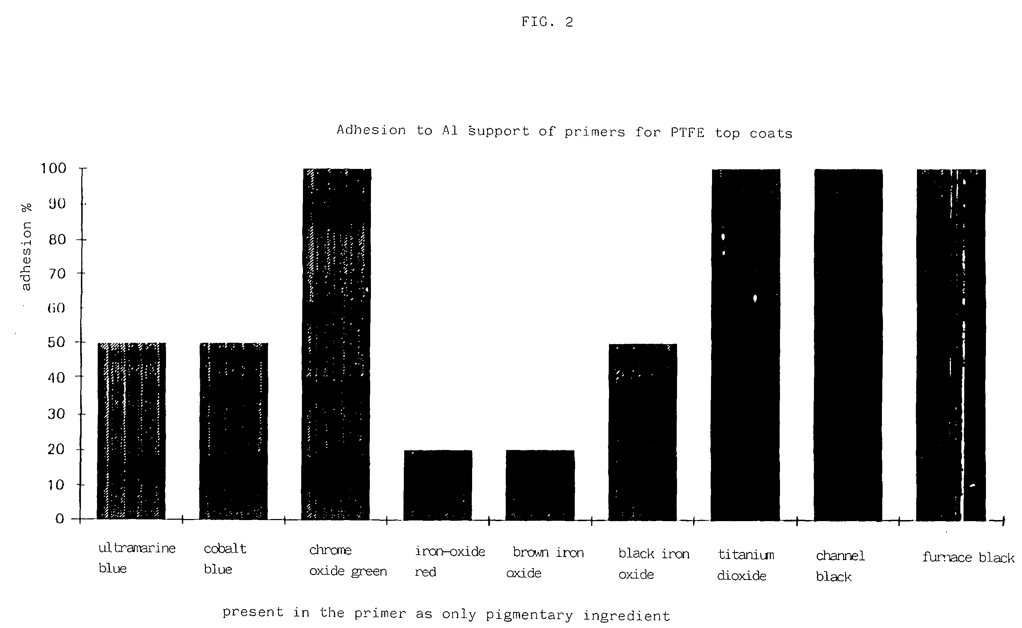

The specimens tested as per Figures 1-4 were painted with the formulation specified in Table 3.

According to this invention, the primer formulation can be added - besides with the specific carbon black type indicated above - also with conventional pigments in a total quantity not exceeding 2% by wt. of the total formulation. When standard pigments are not used in conjunction with carbon black, adhesion and resistance to blistering are not satisfactory.

The typical formulation of a primer to be applied according to the process of the invention is as specified in Table 2.

After being sprayed, the primer is dried at 30°C to 50°C, then baked at a temperature ranging from 380°C to 440°C, preferably from 410°C to 430°C.

One or several finishing layers can then be applied, according to standard techniques.

**Table 1**

| | | | |
|---|---|---|---|
| p1 | Printex 85 | hiding power | good |
| p2 | Corax L | hiding power | good |
| p3 | Special 4 | hiding power | spotwise |
| p4 | Black Pearl 1300 | hiding power | good |
| p5 | Flam Russ 101 | hiding power | poor |
| p6 | Printex 200 | hiding power | good |
| p7 | Nero Durex 0 | hiding power | good |
| p8 | Nero FW 200 | hiding power | good |
| p9 | Special Black 550 | hiding power | good |

**Table 2**

| **PRIMER FOR ALUMINIUM SUPPORTS: FORMULATION** | | | |
|---|---|---|---|
| | (% by wt. on total formulation) | | dry residue (parts by wt. per 100 parts by wt. of paint) |
| | min | max | |
| POLYMERS | | | |
| | | | |
| - PTFE dispersion (60% polytetrafluoroethylene) | 26.5 | 30 | 16 18 |
| | | | |
| - polyamidoimidic resin PAI(^{*}) dry residue | 3.9 | 4.4 | 3.9 - 4.4 |
| | | | |

| SURFACTANTS | | | |
|---|---|---|---|
| | | | |
| - ethoxylated alkylphenols already present in the PTFE dispersion as delivered, | 0.75 | 0.9 | |
| | | | |
| - polyethoxylated alkylphenols | 1.5 | 2 | |
| | | | |
| - acetylene-derived diol | 0.3 | 0.5 | |
| | | | |

| PIGMENTS | | | |
|---|---|---|---|
| | | | |
| - Degussa's Special Black 550® carbon black | 1 | 2 | |
| | | | |
| - other conventional pigments | 0 | 2 | |
| | | | |

| SOLVENTS | | | |
|---|---|---|---|
| | | | |
| - Cellosolve | 3 | 5 | |
| | | | |
| - N-methylpyrrolidone (in the PAI solution as delivered) | 9.6 | 11 | |
| | | | |

| OTHER INGREDIENTS | | | |
|---|---|---|---|
| | | | |
| - colloidal silica in sodium ion-stabilized aqueous dispersion (30% dry residue) | 18 | 20 | 5.4 - 6 |
| | | | |
| - triethylamine TEA | 1.5 | 2.5 | |
| | | | |
| - dimethylethanolamine DMEOLA | 1.5 | 2.5 | |
| | | | |
| - deionized water | balance to 100 | | |

| | | | |
|---|---|---|---|
| (*) (as 29% solution in N-methylpyrrolidone and partially hydrolyzed in the presence of amines). | | | |

**Table 3**

| **PRIMER FOR ALUMINIUM SUPPORTS: FORMULATION USED IN THE TESTS** | | |
|---|---|---|
| | (% by wt. on total formulation) | dry residue (parts by wt. per 100 parts by wt. of paint) |
| POLYMERS | | |
| | | |
| - PTFE dispersion (55% polytetrafluoroethylene) | 28 | 16.8 |
| | | |
| - polyamidoimidic resin PAI (*) dry residue | 4.15 | 4.15 |
| | | |

| SURFACTANTS | | |
|---|---|---|
| | | |
| - ethoxylated alkylphenols already present in the PTFE dispersion as delivered, | 0.82 | |
| | | |
| - polyethoxylated alkylphenols | 1.75 | |
| | | |
| - acetylene-derived diol | 0.4 | |
| | | |

| PIGMENTS | | |
|---|---|---|
| | | |
| - Degussa's Special Black 550® carbon black | 1.5 | |
| | | |

| SOLVENTS | | |
|---|---|---|
| | | |
| - Cellosolve | 4 | |
| | | |
| - N-methylpyrrolidone (in the PAI solution as delivered) | 10.5 | |
| | | |

| OTHER INGREDIENTS | | |
|---|---|---|
| | | |
| - colloidal silica in sodium ion-stabilized aqueous dispersion (30% dry residue) | 19 | 5.7 |
| | | |
| - triethylamine TEA | 2 | |
| | | |
| - dimethylethanolamine DMEOLA | 2 | |
| | | |
| | | |
| - deionized water | balance to 100 | |

| | | |
|---|---|---|
| (*) (as 29% solution in N-methylpyrrolidone and partially hydrolyzed in the presence of amines). | | |

## Claims

1. Process for the application of an antistick PTFE-based coating to pre-degreased aluminium shaped articles, said process comprising:
a) spraying of an aqueous paint suitable for constituting the primer and containing the following essential ingredients:
- PTFE as a 55%-60% by wt. aqueous dispersion of polymer,
- PAI resin as a partially hydrolyzed solution in an organic solvent,
- colloidal silica as sodium ion-stabilized aqueous dispersion, at 30% of dry residue,
- Degussa's Special Black 550® carbon black,
in addition to the standard ingredients used in the said type of paint, particularly surfactants and pigments;
b) drying of the applied primer at 30°C-50°C;
c) heat treatment (baking) of the dried primer at a temperature ranging from 380°C to 440°C, whereby the aluminium shaped articles to be coated have not undergone chemical pickling or mechanical abrasion such as sandblasting or grinding, and exhibit an Ra surface roughness lower than 1,2 µ.

2. The process according to claim 1, wherein the PTFE aqueous dispersion is used in a quantity equal to 16 to 18 parts by wt. on dry basis per 100 parts by wt. of paint, the PAI resin in a quantity equal to 3.9 to 4.4 parts by wt. on dry basis, colloidal silica in a quantity equal to 5.4 to 6 parts by wt. on dry basis, and carbon black in a quantity equal to 1 to 2 parts by wt.

3. The process according to claim 1, wherein the paint used contains carbon black in a quantity equal to 1.5% by wt. in respect of the paint.

4. The process according to claim 1, wherein the paint used contains conventional pigments in quantities up to 2% by wt. in respect of the paint.

5. The process according to claim 1, wherein paint baking takes place at a temperature ranging from 410°C to 430°C.

6. An antistick PTFE-based coating composition for pre-degreased aluminium shaped articles, which have not undergone chemical pickling or mechanical abrasion such as sand-blasting or grinding, and exhibit an Ra surface roughness lower than 1.2 µ, comprising:
an aqueous paint suitable for constituting the primer and containing the following essential ingredients:
- PTFE as a 55%-60% by wt. aqueous dispersion of polymer,
- PAI resin as a partially hydrolyzed solution in an organic solvent,
- colloidal silica as sodium ion-stabilized aqueous dispersion, at 30% of dry residue,
- Degussa's Special Black 550^{R} carbon black, in an amount between 1% and 2% by w. on the aqueous paint,
in addition to the standard ingredients used in the said type of paint, particularly surfactants and pigments.

## Patentansprüche

1. Verfahren zum Aufbringen eines Antihaft-Überzugs auf PTFE-Basis auf vorentfettete Aluminium-Formkörper, das umfaßt:
a) das Aufsprühen einer wäßrigen Anstrichfarbe, die geeignet ist als Grundanstrichfarbe und die zusätzlich zu den Standard-Bestandteilen, wie sie bei dem genannten Typ von Anstrichfarbe verwendet werden, insbesondere Tensiden und Pigmenten, die folgenden wesentlichen Bestandteile enthält:
- PTFE in Form einer 55 bis 60 gew.-%igen wäßrigen Polymer-Dispersion,
- PAI-Harz in Form einer teilweise hydrolysierten Lösung in einem organischen Lösungsmittel,
- kolloidales Siliciumdioxid in Form einer mit Natriumionen stabilisierten wäßrigen Dispersion mit 30 % Trockenrückstand, und
- Special Black 550®-Ruß der Firma Degussa;
b) das Trocknen der aufgebrachten Grundanstrichfarbe bei 30 bis 50°C; und
c) das Wärmebehandeln (Brennen) der getrockneten Grundanstrichfarbe bei einer Temperatur in dem Bereich von 380 bis 440°C,
wobei die zu beschichtenden Aluminium-Formkörper keinem chemischen Beizen oder keinem mechanischen Abrieb, beispielsweise durch Sandstrahlen oder Schleifen, ausgesetzt worden sind und eine Oberflächenrauheit Ra von weniger als 1,2 µm aufweisen.

2. Verfahren nach Anspruch 1, worin die wäßrige PTFE-Dispersion in einer Menge von 16 bis 18 Gew.-Teilen, bezogen auf Trockenbasis, auf 100 Gew.-Teile Anstrichfarbe, das PAI-Harz in einer Menge von 3,9 bis 4,4 Gew.-Teilen, bezogen auf Trockenbasis, das kolloidale Siliciumdioxid in einer Menge von 5,4 bis 6 Gew.-Teilen, bezogen auf Trockenbasis, und der Ruß in einer Menge von 1 bis 2 Gew.-Teilen verwendet werden.

3. Verfahren nach Anspruch 1, worin die verwendete Anstrichfarbe Ruß in einer Menge von 1,5 Gew.-Teilen, bezogen auf das Gewicht der Anstrichfarbe, enthält.

4. Verfahren nach Anspruch 1, worin die verwendete Anstrichfarbe konventionelle Pigmente in Mengen von bis zu 2 Gew.-%, bezogen auf das Gewicht der Anstrichfarbe, enthält.

5. Verfahren nach Anspruch 1, worin das Brennen der Anstrichfarbe bei einer Temperatur in dem Bereich von 410 bis 430°C durchgeführt wird.

6. Antihaft-Beschichtungszusammensetzung auf PTFE-Basis für vorentfettete Aluminium-Formkörper, die keiner chemischen Beizung oder keinem mechanischen Abrieb, beispielsweise durch Sandstrahlen oder Schleifen, ausgesetzt worden sind und eine Oberflächenrauheit Ra von weniger als 1,2 µm aufweisen, die eine wäßrige Anstrichfarbe umfaßt, die geeignet ist als Grundanstrichfarbe und zusätzlich zu den Standard-Bestandteilen, wie sie in dem genannten Typ von Anstrichfarbe verwendet werden, insbesondere Tensiden und Pigmenten, die folgenden wesentlichen Bestandteile enthält:
- PTFE in Form einer 55 bis 60 gew.-%igen wäßrigen Polymer-Dispersion,
- PAI-Harz in Form einer teilweise hydrolysierten Lösung in einem organischen Lösungsmittel,
- kolloidales Siliciumdioxid in Form einer mit Natriumionen stabilisierten wäßrigen Dispersion mit 30 % Trockenrückstand und
- Special Black 550®-Ruß der Firma Degussa in einer Menge zwischen 1 und 2 Gew.-%, bezogen auf das Gewicht der wäßrigen Anstrichfarbe.

## Revendications

1. Procédé pour le dépôt de revêtements anti-adhérents à base de PTFE sur des objets façonnés en aluminium pré-dégraissés, ledit procédé comprenant :
(a) la pulvérisation d'une peinture aqueuse convenant à la constitution de l'apprêt et contenant les ingrédients essentiels suivants :
- du PTFE sous la forme d'une dispersion aqueuse à 55 %-60 % de polymère,
- de la résine PAI sous la forme d'une solution partiellement hydrolysée, dans un solvant organique,
- de la silice colloïdale sous la forme d'une dispersion aqueuse stabilisée avec des ions sodium, à 30 % de résidu sec,
- du noir de carbone Special Black 550® d'origine Degussa, en plus des ingrédients standards utilisés dans ledit type de peinture, en particulier des surfactants et des pigments ;
(b) le séchage de l'apprêt appliqué, à 30°C-50°C ;
(c) un traitement thermique (cuisson au four) de l'apprêt séché, à une température comprise entre 380°C et 440°C, grâce à quoi les objets façonnés en aluminium et devant être revêtus, ne subissent aucun traitement chimique ou abrasion mécanique telle que sablage ou meulage, et présentent une rugosité de surface Ra inférieure à 1,2 µm.

2. Procédé selon la revendication 1, dans lequel la dispersion aqueuse de PTFE est utilisée en quantité comprise entre 16 et 18 parties en poids, exprimé en produit sec, pour 100 parties en poids de peinture, la résine PAI est utilisée en quantité comprise entre 3,9 et 4,4 parties en poids, exprimé en produit sec, la silice colloïdale est utilisée en quantité comprise entre 5,4 et 6 parties en poids, exprimé en produit sec, et le noir de carbone est utilisé en quantité comprise entre 1 et 2 parties en poids.

3. Procédé selon la revendication 1, dans lequel la peinture utilisée contient du noir de carbone en quantité égale à 1,5 % en poids par rapport à la peinture.

4. Procédé selon la revendication 1, dans lequel la peinture utilisée contient des pigments conventionnels en quantités allant jusqu'à 2 % en poids par rapport à la peinture.

5. Procédé selon la revendication 1, dans lequel la cuisson au four de la peinture se déroule à une température comprise entre 410°C et 430°C.

6. Composition de revêtement anti-adhérent à base de PTFE pour des objets façonnés en aluminium pré-dégraissés, qui n'ont subi aucun traitement chimique de conservation ou aucune abrasion mécanique telle que sablage ou meulage, et qui présentent une rugosité de surface Ra inférieure à 1,2 µm, comprenant :
une peinture aqueuse appropriée à la constitution de l'apprêt et contenant les ingrédients essentiels suivants :
- du PTFE sous la forme d'une dispersion aqueuse à 55 %-60 % en poids, de polymère,
- de la résine PAI sous la forme d'une solution partiellement hydrolysée, dans un solvant organique,
- de la silice colloïdale sous la forme d'une dispersion aqueuse stabilisée par des ions sodium, à 30 % de résidu sec,
- du noir ce carbone Special Black 550® d'origine Degussa, en quantité comprise entre 1 % et 2 % en poids par rapport à la peinture aqueuse,
en plus des ingrédients standards employés dans ledit type de peinture, en particulier des surfactants et des pigments.
